Europäisches Patentamt

European Patent Office

Office européen des brevets

(11) Veröffentlichungsnummer: **0 138 033**
**B1**

(12) **EUROPÄISCHE PATENTSCHRIFT**

(19)

(45) Veröffentlichungstag der Patentschrift:
30.03.88

(21) Anmeldenummer: 84110586.9

(22) Anmeldetag: 06.09.84

(51) Int. Cl.⁴: **C 09 D 3/00**, C 09 D 7/12,
C 08 F 265/06

(54) **In Benzin gelbildende Verdickungs- und Bindemittel.**

(30) Priorität: 16.09.83 DE 3333503

(43) Veröffentlichungstag der Anmeldung:
24.04.85 Patentblatt 85/17

(45) Bekanntmachung des Hinweises auf die Patenterteilung:
30.03.88 Patentblatt 88/13

(84) Benannte Vertragsstaaten:
AT BE CH DE FR GB IT LI NL SE

(56) Entgegenhaltungen:
EP - A - 0 022 982
FR - A - 2 176 782
FR - A - 2 358 431
GB - A - 1 117 124
US - A - 3 659 003
US - A - 3 812 205

(73) Patentinhaber: Röhm GmbH, Kirschenallee
Postfach 4242, D-6100 Darmstadt 1 (DE)

(72) Erfinder: Elser, Wilhelm, Am Sportfeld 1,
D-6103 Griesheim (DE)
Erfinder: Hübner, Klaus, Dr., Leipziger Strasse 9,
D-6105 Ober-Ramstadt (DE)
Erfinder: Siol, Werner, Dr., Goerdelerweg 34,
D-6100 Darmstadt (DE)
Erfinder: Mager, Theodor, Ödenburger Strasse 54,
D-6100 Darmstadt (DE)
Erfinder: Wicke, Michael, Im Sandacker 7,
D-6104 Seeheim-Jugenheim (DE)

## Beschreibung

### Gebiet der Erfindung

Die Erfindung betrifft in Benzin quellbare und gelbildende Verdickungs-und Bindemittel für physikalisch trocknende wasserfreie Anstrich- und Beschichtungsstoffe.

### Stand der Technik

Verdickungs- und Bindemittel der erwähnten Art sind bekannt aus der europäischen Patentanmeldung 22 982. Sie bestehen aus einem Copolymerisat aus höheren Acrylsäure- oder Methacrylsäurealkylestern mit Vinylaromaten oder mittleren Acrylsäure- oder Methacrylsäurealkylestern und mehrfach ungesättigten Vernetzungsmitteln und werden vorzugsweise durch wässrige Emulsionspolymerisation erzeugt. Aus der entstehenden Dispersion wird das Emulsionspolymerisat durch Fällung, Filtration und Trocknung oder durch Sprüh- oder Wirbelbett-Trocknung isoliert.

### Aufgabe und Lösung

Unter den erwähnten Gewinnungsverfahren für das trockene Emulsionspolymerisat ist die Sprühtrocknung das vorteilhafteste, weil es in einem Arbeitsschritt zu einem feinteiligen Pulverprodukt führt. Es hat aber den Nachteil, dass es wegen der niedrigen Erweichungstemperatur des Emulsionspolymerisats nur bei niedriger Temperatur und sehr geringem Mengendurchsatz betrieben werden kann. Darüber hinaus ist das erhaltene Polymerisatpulver nur bei niedriger Temperatur lagerfähig und neigt bei erhöhter Umgebungstemperatur, die beim Transport oder bei der Lagerung gelegentlich auftreten kann, zum Verklumpen.

Es bestand daher die Aufgabe, ein in Benzin gelbildendes Verdickungs- und Bindemittel zu entwickeln, das weder bei der Herstellung durch Sprühtrocknung unter technisch gebräuchlichen Arbeitsbedingungen noch bei der Lagerung unter erhöhter Umgebungstemperatur verklumpt.

Es ist allgemein bekannt, dass sich das thermische Verhalten von Emulsionspolymerisaten durch ein mehrstufiges Herstellungsverfahren, bei dem man in der letzten Stufe eine Polymerisatschale von erhöhter Erweichungstemperatur auf den Latexteilchen erzeugt, verbessern lässt. Auch im vorliegenden Fall konnte die Verklumpungsneigung wesentlich vermindert werden, indem man in einer zweiten Stufe der Emulsionspolymerisation eine Schale aus Polyisobutylmethacrylat erzeugte. Das so erzeugte Verdickungsmittel zeigte in Lösung allerdings nicht das gewünschte kurz abreissende Verhalten, sondern war fadenziehend. Dieser Nachteil liess sich auch nicht durch Mitverwendung des im Kern des Emulsionspolymerisats verwendeten Vernetzungsmittels beseitigen. Mit steigenden Vernetzungsmittelmengen verschwand gleichzeitig mit dem Fadenziehen auch die Verdickungswirkung.

Es wurde gefunden, dass die gestellte Aufgabe gelöst wird, wenn das Emulsionspolymerisat aus

A) wenigstens 80 Gew.% Alkylestern der Methacrylsäure oder eines Gemisches von Alkylestern der Acryl- und der Methacrylsäure mit jeweils 4 oder mehr C-Atomen im Alkylrest

B) wenigstens einem vernetzenden Monomeren

C) gegebenenfalls monoolefinisch ungesättigten aromatischen Comonomeren in einem Anteil unter 20 Gew.%

D) gegebenenfalls monoolefinisch ungesättigten, nicht benzinlöslichen Comonomeren in einem Anteil bis zu 10 Gew.% zweistufig aufgebaut ist und zu 40 bis 80 Gew.% (bezogen auf das Gesamtgewicht des Emulsionspolymerisats) aus einem Kernmaterial der oben angegebenen Zusammensetzung, das als vernetzende Monomere B 0,1 bis 2 Gew.% (bezogen auf das Kernmaterial) Einheiten von Verbindungen mit wenigstens zwei polymerisierbaren olefinischen Kohlenstoff-Doppelbindungen, deren Reaktivität mit der der Monomeren A vergleichbar ist, enthält, und zu 60 bis 20 Gew.% aus einem Schalenmaterial der oben angegebenen Zusammensetzung besteht, das als Alkylester der Methacrylsäure A Einheiten des Isobutyl- oder Cyclohexylmethacrylats und als vernetzende Monomere B 0,05 bis 4 Gew.% (bezogen auf das Schalenmaterial) Einheiten von pfropfvernetzenden Monomeren mit einer olefinischen Kohlenstoffdoppelbindung, deren Reaktivität mit der der Monomeren A vergleichbar ist, und wenigstens einer weiteren olefinischen Kohlenstoffdoppelbindung von geringerer Reaktivität enthält.

### Vorteile

Das im Sinne der Erfindung aufgebaute Emulsionspolymerisat kann bei etwa 70°C durch Sprühtrocknung aus der zugrundeliegenden Dispersion mit einer Geschwindigkeit erzeugt werden, die der Kapazität üblicher Sprühtrocknungsanlagen entspricht. Das erhaltene feinteilige Pulver ist selbst bei einer Temperatur von 40°C ohne Verklumpung lagerfähig und bleibt in Benzin leicht löslich. Die Lösung zeigt ein kurz abreissendes Verhalten.

Darüber hinaus wurde festgestellt, dass der Aufbau des Emulsionspolymerisats aus Kern und Schale die Quellungscharakteristik in aliphatischen Kohlenwasserstoffen günstig beeinflusst. Selbst wenn das Kernmaterial eine Härte hat, die die Isolierung durch Sprühtrocknung gestatten würde, zeigt die daraus hergestellte Lösung ein weniger vorteilhaftes Fliessverhalten als die erfindungsgemässen Bindemittellösungen.

### Gewerbliche Verwertbarkeit

Das erfindungsgemässe Verdickungs- und Bindemittel kann in gleicher Weise wie die bekannten Mittel nach dem Stand der Technik zur Herstellung physikalisch trocknender Anstrich- und Beschichtungsstoffe mit Benzin als Lösungsmittel eingesetzt werden. Unter Benzin werden Gemische aliphatischer Kohlenwasserstoffe in einem Siedebereich von 100 bis 250°C gegebenenfalls mit bis zu 20 Gew.% an aromatischen Kohlenwasserstoffen, wie Toluol oder Xylol, verstanden.

## Ausführung der Erfindung

Das Emulsionspolymerisat besteht im Zustand seiner Herstellung, also vor der Isolierung durch Sprühtrocknung, aus in einer Wasserphase dispergierten Latexteilchen, deren mittlerer Teilchendurchmesser über 100 nm, vorzugsweise über 150 nm liegen sollte. Der mittlere Teilchendurchmesser ist ein Gewichtsmittelwert, der z.B. durch Trübungsmessung feststellbar ist. Als Kernmaterial wird der in der ersten Stufe der Emulsionspolymerisation erzeugte Polymerisatanteil bezeichnet, während der in der zweiten Stufe erzeugte Anteil als Schalenmaterial bezeichnet wird. Es wird angenommen, dass das Schalenmaterial das Kernmaterial so weit einschliesst, dass das Kernmaterial eines Latexteilchens bei Annäherung an ein anderes Teilchen nicht mit dessen Kernmaterial in Berührung treten kann. Diese Annahme steht mit den Eigenschaften des Polymerisats in Einklang. Der Anteil des Kernmaterials an dem Emulsionspolymerisat liegt vorzugsweise bei 40 bis 80 Gew.%, der Anteil des Schalenmaterials dementsprechend bei 20 bis 60 Gew.%. Wenn der Schalenmaterialanteil unter 20 Gew.% liegt, ist eine Verklebung der Pulverkörner beim Lagern und ein Anhaften des Polymerisats an der Sprühtrocknungsanlage nicht mehr auszuschliessen. Ein Anteil von mehr als 60 Gew.% des Schalenmaterials ist für die angestrebte Wirkung nicht erforderlich und im Hinblick auf die Verdickungswirkung eher nachteilig.

Sowohl das Kernmaterial als auch das Schalenmaterial sind so aufgebaut, dass sie in Benzin unter Gelbildung quellen. Eine echte Löslichkeit wird durch die Mitverwendung vernetzender Monomerer in beiden Polymerisatbestandteilen verhindert, jedoch wären beide Polymerisatbestandteile in Benzin löslich, wenn sie für sich allein ohne die vernetzende Komponente B hergestellt worden wären. In Grenzfällen lässt sich die für die Erfindung erforderliche Quellbarkeit an der Benzinlöslichkeit der entsprechenden unvernetzten Emulsionspolymerisate aus den Bestandteilen A und gegebenenfalls C und D feststellen.

Die Monomeren A sind so gewählt, dass sie aufgrund ihrer mittleren bis höheren Alkylreste benzinlösliche Homopolymerisate bilden. Die Alkylreste können gerade oder verzweigt sein und enthalten in der Regel nicht mehr als 18 C-Atome. Für die Zwecke der Erfindung sind mehr als 12 C-Atome nicht erforderlich. Die bevorzugten Monomeren A enthalten Alkylreste mit 4 bis 8 C-Atomen, insbesondere verzweigte oder cycloaliphatische Alkylreste.

Die zur Gruppe A gehörenden Monomeren unterscheiden sich in der weichmachenden Wirkung auf die Polymerisate, an deren Aufbau sie beteiligt sind. Acrylsäurealkylester wirken stärker weichmachend als die entsprechenden Methacrylsäurealkylester mit gleichgrossen Alkylresten. Bei den Acrylsäure- und den Methacrylsäureestern nimmt die weichmachende Wirkung mit steigender Anzahl von Kohlenstoffatomen bis etwa $C_{12}$ zu und nimmt bei noch höheren Alkylresten wieder ab. Verhältnismässig harte Polymerisate ergeben Isobutyl-, sec.-Butyl- und Cyclohexyl-methacrylat sowie tert.-Butylacrylat. Polymerisate von geringerer Härte entstehen aus n-Butylmethacrylat. Weiche bis sehr weiche Polymerisate entstehen aus den Methacrylsäurealkylestern von $C_6$- bis $C_{12}$-Alkoholen und aus allen Acrylsäurealkylestern ausser tert.-Butylacrylat. Im allgemeinen bilden Methacrylsäurealkylester den überwiegenden Teil der Komponente A.

Die Einstellung der Härte bzw. Weichheit des Kernmaterials hängt von der Art der Anwendung ab. Als alleiniges Bindemittel für hochgefüllte Anstrichfarben oder als Verdickungsmittel neben einem härteren Bindemittel eignen sich verhältnismässig weiche Polymerisate mit $T_{1max}$-Werten bis herab zu 20°C. Der $T_{1max}$-Wert ist die Temperatur des Dämpfungsmaximums im Torsionsschwingungsversuch nach DIN 53445, gemessen an einem Film des ganzen Emulsionspolymerisats. Allerdings sind bei sehr weicher Einstellung des Kernmaterials Haftungs- und Verklebungsprobleme bei der Herstellung und Lagerung des Polymerisats vor allem dann nicht auszuschliessen, wenn der Anteil des Schalenmaterials sehr niedrig ist. Der $T_{1max}$-Wert des Kernmaterials liegt vorzugsweise im Bereich von 20 bis 80°C, insbesondere von 40-75°C.

Eine hohe Polymerisathärte, gekoppelt mit einem hohen $T_{1max}$-Wert, ist vor allem dann erwünscht, wenn das Emulsionspolymerisat als Alleinbindemittel in verhältnismässig schwach gefüllten Anstrichfarben oder Beschichtungsmitteln oder als Verdickungsmittel oder Co-Bindemittel zusammen mit sehr weichen Bindemitteln oder weichmachenden Zusätzen eingesetzt werden soll.

Die Härte des Kernmaterials hängt von allen daran beteiligten Monomerkomponenten ab. Aromatische Comonomere wirken hartmachend auf das Emulsionspolymerisat, aber beeinträchtigen die Quellbarkeit in Benzin nicht. Darunter werden Monomere mit wenigstens einem aromatischen Rest, insbesondere einem Phenylrest, der auch niedere Alkylsubstituenten, wie eine oder mehrere Methyl-, Äthyl-, Propyl- oder Butylreste tragen kann, sowie einer radikalisch polymerisierbaren Gruppe verstanden, wie eine Vinyl-, Isopropenyl-, Acryl- oder Methacrylgruppe, die direkt oder über eine Zwischengruppe mit dem aromatischen Rest verbunden sein können. Beispiele geeigneter Monomerer sind Styrol, α-Methylstyrol, Vinyltoluol, Benzylacrylat und Benzylmethacrylat. Da diese Monomeren bei hohen Anteilen die Vergilbungsneigung der Anstiche und Beschichtungen förern würden, werden sie nicht in Mengen über 20 Gew.% des Emulsionspolymerisats eingesetzt.

Als nicht benzinlösliche Comonomere werden solche monoolefinisch ungesättigten, radikalisch polymerisierbaren oder wenigstens copolymerisierbaren Verbindungen bezeichnet, die entweder selbst oder in Form ihrer Homopolymerisate bei Raumtemperatur in Benzin nicht löslich sind. Die Höchstmenge von 10 Gew.% im Kern- oder Schalenmaterial führt wenigstens dann nicht zur Unlöslichkeit des Polymerisats, wenn die übrigen Monomerbestandteile diese Löslichkeit ausreichend fördern, wie z.B. höhere Alkylester der Methacrylsäure. Andernfalls ist der Anteil der Monomerkomponente D deutlich unter 10 Gew.-% zu halten.

Die Comonomeren D können dazu dienen, dem Polymerisat bestimmte erwünschte Eigenschaften zu verleihen. So verbessern hydroxylgruppenhaltige Comonomere, insbesondere Hydroxyalkylester der Acryl- oder Methacrylsäure, in denen der Alkylrest vorzugsweise 2 bis 4 C-Atome enthält, die Pigmentierbarkeit. Aminogruppen enthaltende Comonomere, wie N-Vinylimidazol oder Dialkylaminoalkylester und -amide der Acryl- und Methacrylsäure, verbessern die Haftungseigenschaften der Überzüge und Beschichtungen am Untergrund. Niedere Ester der Acryl- und insbesondere der Methacrylsäure, wie Methylmethacrylat, vermögen bereits in geringen Mengen die Polymerisation der anderen Monomeren zu beschleunigen.

Die Härte des Emulsionspolymerisats bzw. der daraus herstellbaren Filme wird weiterhin durch die Eigenschaften und die Menge des Schalenmaterials beeinflusst. Das Schalenmaterial kann – abgesehen vom Polymerisationsgrad und der Art des Vernetzungsmittels – die gleiche Zusammensetzung wie das Kernmaterial haben, ist jedoch in der Regel härter eingestellt. Für die Beschaffenheit im Gelzustand ist es vorteilhaft, wenn das Kern- und das Schalenmaterial miteinander verträglich sind. Das ist dann der Fall, wenn Lösungen der entsprechenden unvernetzten Polymerisate in Benzin ohne Fällung mischbar sind. Das Schalenmaterial enthält als Monomerkomponente A Einheiten des Isobutyloder Cyclohexylmethacrylats, von denen das erstgenannte bevorzugt ist. Diese Monomeren ergeben, auch in Kombination mit aromatischen Comonomeren, harte Polymerisate, wodurch die Gesamthärte des Emulsionspolymerisats gegenüber der des Kernmaterials allein im allgemeinen erhöht wird. Der $T_{1max}$-Wert des Schalenmaterials liegt, wenn es für sich allein hergestellt wird, vorzugsweise im Bereich von 70 bis 100°C. In diesem Falle liegt die Mindestfilmbildungstemperatur der zugrundeliegenden Dispersion des Emulsionspolymerisats über 65°C. Dadurch ist es möglich, die Sprühtrocknung unterhalb der Mindestfilmbildungstemperatur durchzuführen, wobei keine Verklumpungen oder Anhaftungen zu befürchten sind. Massgeblich ist die Austrittstemperatur des zur Sprühtrocknung verwendeten Luftstroms.

Das vernetzende Monomere B

Wenn das Emulsionspolymerisat nicht vernetzt wäre, würde es in Benzin echte, viskose, fadenziehende Lösungen ergeben, die anwendungstechnisch unerwünscht sind. Die Vernetzung verhindert die echte Löslichkeit in Benzin, muss aber auf ein solches Mass beschränkt bleiben, dass die Polymerisatteilchen in Benzin in stark gequollene Gelteilchen übergehen. Man erhält z.B. bei einer Konzentration von 20 bis 30 Teilen des Polymerisats auf 100 Teile Benzin scheinbare, fast klare Lösungen mit einer ausgeprägten Fliessgrenze. Die Fliessgrenze ist zwar grundsätzlich messbar, jedoch zieht der Praktiker eine visuelle Bewertung des Fliessverhaltens im allgemeinen vor. Eine wesentliche Eigenschaft dieser Lösungen besteht darin, dass sie trotz hoher Viskosität nicht fadenziehend, sondern «kurz abreissend» sind. Diese Eigenschaft ist eine wichtige Voraussetzung bei der Anwendung als Verdickungs- und Bindemittel in hochgefüllten Beschichtungsmassen und Putzen, die nach dem Auftragen auf einen Untergrund nur noch wenig fliessen, was – physikalisch zwar ungenau – auch als thixotrop bezeichnet wird.

Das Optimum dieser Gelbildungsfähigkeit kann durch sorgfältige Dosierung der Vernetzungsmittelmenge und durch Beobachtung der damit erzielbaren Viskositätseigenschaften ermittelt werden. Die Optimierung wird erleichtert, wenn man für Versuchszwecke das Schalenmaterial weglässt und eine Isolierungsmethode anwendet, bei der das Material nicht stark verklebt, z.B. die Gefriertrocknung. Ist die Vernetzungsmittelmenge zu gering, so ist das entstehende Polymerisat zwar verzweigt, aber in Benzin noch echt löslich und fadenziehend. Ist dagegen die Vernetzungsmittelmenge zu gross, so tritt keine ausreichende Quellung der Polymerisatteilchen ein und es zeigt sich weder eine Verdickungswirkung noch das erwähnte «kurz abreissende» Verhalten. Das Optimum liegt in der Regel dicht über dem Vernetzungsmittelgehalt, an dem eine echte, beliebig verdünnbare Lösung des Polymerisats gerade nicht mehr herstellbar ist und bei starker Verdünnung eine Trennung zwischen gequollenem Gel und einer klaren Lösungsmittelphase zu beobachten ist. Die Vernetzungsmittelmenge im Kernmaterial liegt zwischen 0,1 und 2, vorzugsweise zwischen 0,2 und 1 Gew.%, bezogen auf das Gewicht des Kernmaterials. Das Optimum liegt bei Vernetzungsmitteln von hohem Molekulargewicht im allgemeinen bei einem höheren Gewichtsanteil als bei Vernetzungsmitteln von geringerem Molekulargewicht.

Die Erfindung beruht auf der überraschenden Erkenntnis, dass die Natur der in dem Kernmaterial und in dem Schalenmaterial verwendeten Vernetzungsmittel von wesentlicher Bedeutung für die Gelbildungseigenschaften ist. Es wurde gefunden, dass für die Vernetzung des Kernmaterials nur solche Vernetzungsmittel geeignet sind, die wenigstens zwei polymerisierbare, olefinische Kohlenstoffdoppelbindungen haben, deren Reaktivität mit der der Monomeren A vergleichbar ist. Das ist der Fall, wenn diese Doppelbindungen bei der Polymerisation nicht wesentlich schneller oder nicht wesentlich langsamer umgesetzt werden als die der Monomeren A.

Die Monomeren A enthalten Methacryl- und gegebenenfalls Acrylsäureester-Reste. Alle Vernetzungsmittel, die gleichfalls zwei oder mehr Acryl- oder Methacrylsäureester-Reste enthalten, können ohne weiteres zur Gruppe der Verbindungen mit Doppelbindungen vergleichbarer Reaktivität gerechnet werden. Im wesentlichen gilt das gleiche für Verbindungen mit zwei oder mehr Acryl- oder Methacrylamidogruppen, wie Methylen-bis-acrylamid und -methacrylamid, sowie für Verbindungen, die zwei oder mehr unmittelbar an einen aromatischen Rest gebundene Vinylgruppen enthalten, wie Divinylbenzol.

Bevorzugte Vernetzungsmittel für das Kernmaterial sind die Ester der Acryl- und Methacrylsäure von Diolen oder Polyolen, die wenigstens zwei der genannten Säurereste enthalten, also Dioldiacrylate und -methacrylate, Triol-triacrylate und -methacrylate usw. Beispiele dieser Vernetzungsmittel sind die Diacrylate und Dimethacrylate des Äthylenglykols, Propylenglykols, 1,2- oder 1,4-Butylenglykols, Hexandiols-1,6, Decandiols-,12, Neopentylglykols, Diäthylenglykols, Triäthylenglykols, Tetraäthylenglykols, Dipropylenglykols, Tripropylenglykols, ferner Trimethylolpropandiacrylat, -dimethacrylat, -triacrylat und -trimethacrylat, Pentaerythrit-tetraacrylat und -methacrylat.

Vernetzungsmittel dieser Art sind auch bisher schon zur Herstellung gelbildender Verdickungs- und Bindemittel verwendet worden, jedoch war es noch nicht bekannt, dass sie nicht durch Vernetzungsmittel mit zwei Doppelbindungen von unterschiedlicher Reaktivität ersetzbar sind. Bei deren Verwendung würden stark fliessende Polymerisatsysteme erhalten. Um so überraschender ist es, dass für das Schalenmaterial gerade das Umgekehrte gilt: Werden zu seiner Herstellung Vernetzungsmittel mit Doppelbindungen gleicher Reaktivität verwendet, so erhält man entweder fadenziehende oder nicht verdickende Emulsionspolymerisate. Das Emulsionspolymerisat hat nur dann die erwünschten gelbildenden Eigenschaften, wenn im Schalenmaterial «pfropf-vernetzende» Verbindungen verwendet werden. Darunter werden Verbindungen verstanden, die nur eine polymerisierbare olefinische Kohlenstoff-Doppelbindung, deren Reaktivität mit der der Monomeren A vergleichbar ist, und wenigstens eine weitere, olefinische Kohlenstoff-Doppelbindung enthalten, deren Reaktivität deutlich geringer ist und die infolgedessen bei der Polymerisation langsamer umgesetzt werden als die Monomeren A. Der Begriff der «Pfropfvernetzung» ist in der DE-AS 2 253 689 eingehend erläutert worden. Die erstgenannte Doppelbindung ist vorzugsweise in einem Acryl- oder Methacrylrest, insbesondere -esterrest, enthalten, während die zuletzt genannte Doppelbindung beispielsweise ein Allyl-, Methallyl-, Crotyl- oder Cycloalkenylrest sein kann. Bevorzugte Pfropfvernetzer sind Allylacrylat und Allylmethacrylat.

Das Optimum der Pfropfvernetzermenge wird für das Schalenmaterial genauso ermittelt wie das des Vernetzungsmittels im Kernmaterial, wobei man von einem bereits optimierten Kernmaterial ausgehen sollte. Die Pfropfvernetzermenge liegt zwischen 0,05 und 4 Gew.%, vorzugsweise 0,5 und 2,5 Gew.%, bezogen auf das Schalenmaterial. Für Allylmethacrylat findet man das Optimum in der Regel zwischen 1 und 2 Gew.%.

Herstellung des Emulsionspolymerisats

Das Emulsionspolymerisat ist nach bekannten Verfahren der mehrstufigen Emulsionspolymerisation herstellbar. Grundsätzlich findet die Polymerisation in einer wässrigen Phase statt, die Emulgiermittel enthält. Als Emulgiermittel werden die in der Emulsionspolymerisation üblichen wasserlöslichen Tenside mit HLB-Werten zwischen 8 und 18 eingesetzt. Vorzugsweise verwendet man anionische Emulgiermittel, jedoch sind auch nichtionische oder kationische Emulgatoren und Kombinationen derselben, soweit sie miteinander verträglich sind, anwendbar. Beispiele gebräuchlicher anionischer Emulgatoren sind Seifen, Sulfonate wie Na-Paraffinsulfonat, Na-Dodecylbenzolsulfonat, Sulfate, wie Na-Laurylsulfat, Na-Cetylsulfat, Na-Oleylsulfat und die Alkalisalze sulfierter Äthylenoxidaddukte von Alkylphenolen, wie Tri-isobutyl-phenol oder Nonylphenol, die mit der 2- bis 10fachen Molmenge Alkylenoxid umgesetzt, sulfatiert und neutralisiert sind.

Die zu Beginn der Emulsionspolymerisation vorliegende Emulgatormenge beeinflusst die Teilchengrösse. Eine Erhöhung der anfänglichen Emulgatormenge bewirkt eine Verminderung der durchschnittlichen Teilchengrösse und umgekehrt. Angestrebt wird eine mittlere Teilchengrösse (Gewichtsmittelwert nach Trübungsmessung) zwischen 100 und 1000 nm, vorzugsweise 150 bis 500 nm.

In der ersten Verfahrensstufe wird das Kernmaterial aus den zugrundeliegenden Monomeren A bis D erzeugt. Die Monomeren können in der Wasserphase vor Polymerisationsbeginn emulgiert oder während der Polymerisation nach und nach als solche oder als wässrige Emulsion zugesetzt werden. Die Polymerisation wird bei 60 bis 90°C mittels meist wasserlöslicher Initiatoren, vor allem Alkali- oder Ammoniumperoxodisulfaten durchgeführt. Sobald die Monomeren des Kernmaterials vollständig zugesetzt und weitgehend oder ganz polymerisiert sind, kann die Emulsionspolymerisation mit der zweiten Verfahrensstufe gegebenenfalls ohne Veränderung der Verfahrensbedingungen, fortgesetzt werden. Zu diesem Zweck können die Monomeren der zweiten Stufe in dem Latex der ersten Stufe emulgiert und anschliessend polymerisiert oder unter den Polymerisationsbedingungen als solche oder als wässrige Emulsion allmählich zugesetzt werden. Wenn auch die Monomeren der zweiten Stufe vollständig zugesetzt sind, hält man die Polymerisationsbedingungen noch solange aufrecht, bis vollständiger Umsatz erreicht ist. Übliche Massnahmen zum Umsatz oder zur Entfernung von Restmonomeren können sich anschliessen.

Das erwünschte Quellverhalten des Emulsionspolymerisats hängt u.a. von einem ausreichend hohen Polymerisationsgrad der vernetzten Polymerisatkettenmoleküle des Kernmaterials ab. Wegen der Vernetzung ist der Polymerisationsgrad bzw. das Molekulargewicht nicht unmittelbar messbar. Ein hoher Polymerisationsgrad wird erreicht, wenn man in der ersten Stufe der Emulsionspolymerisation alle polymerisationshemmenden oder -abbrechenden Einflüsse möglichst ausschaltet. Man führt die Polymerisation daher möglichst in Abwesenheit von Kettenübertragungsmitteln, wie Merkaptanen, Sulfiden, Chlorkohlenwasserstoffen, Terpenen, und von Inhibitoren, wie Phenolen, primären oder sekundären Aminen, Hydrochinon, durch. Weiterhin sollte der Radikalstrom, d.h. die Menge der pro Zeiteinheit während der Dauer der Polymerisation zerfallenden radikalbildenden Initiatoren, so niedrig gehalten werden, dass sich die Polymerisation gerade mit der technisch erforderlichen Geschwindigkeit durchführen lässt. Daher sollen auch polymerisationsbeschleunigende Fremdstoffe, wie Reduktionsmittel oder Schwermetalle, möglichst ausgeschlossen werden, soweit sie nicht bewusst als Bestandteil eines Redoxsystems bei entsprechend niedriger Temperatur eingesetzt werden. Vorzugsweise wird die Initiatormenge auf 0,05 Gew.% (bezogen auf die Monomeren) begrenzt.

Während das Kernmaterial möglichst hochmolekular sein soll, wird für das Schalenmaterial ein geringerer Polymerisationsgrad bevorzugt. Daher wird das Schalenmaterial vorzugsweise in Gegenwart eines Reglers, wie Dodecylmercaptan, einem Thioglykolsäureester des Butanols, 2-Äthyl-hexanols, 1-Octanols oder einem anderen Mercaptan erzeugt.

Geeignete Reglermengen liegen zwischen 0,1 und 1 Gew.%, vorzugsweise 0,4–0,8 Gew.%, bezogen auf das Schalenmaterial.

Die eingesetzten Mengen der vorgelegten und gegebenenfalls mit der Monomerenemulsion eingetragenen Wassermengen, werden mit der insgesamt eingesetzten Monomerenmenge so abgestimmt, dass Dispersionen mit einem Polymerisatgehalt von 30 bis 70 Gew.% erhalten werden. Geringere Polymerisatgehalte sind wegen des erforderlichen Energiebedarfs zur Wasserverdunstung bei der Sprühtrocknung unwirtschaftlich, während höhere Polymerisatgehalte die Gefahr der Koagulatbildung, Verklumpung, Anhaftung u.dergl. erhöhen. Unter diesen Gesichtspunkten sind Dispersionen mit einem Feststoffgehalt von 40 bis 50 Gew.% am vorteilhaftesten. Die Sprühtrocknung ist die bestgeeignete Methode zur Überführung der Dispersion in ein pulverförmiges Festprodukt. Bei ausreichend hoher Härte des Kern- und Schalenmaterials sind Trocknungstemperaturen bis zu 90°C anwendbar. Im Bereich von 60 bis 80°C für die Austrittstemperatur der Luft werden im allgemeinen Anhaftungen an den Sprüh- und Verteilungsvorrichtungen und den Wandungen der Sprühtrocknungsanlage, sowie eine Verklumpung des abgesetzten Pulvers sicher vermieden.

Wenn die Austrittstemperatur der Luft die Glastemperatur des Emulsionspolymerisats überschreitet, erhält man verglaste oder zusammengesinterte Pulverteilchen, während man locker aufgebaute, weitgehend aus lose aggregierten Latexteilchen zusammengesetzte Pulverkörnchen erhält, wenn die Trocknungstemperatur unterhalb der Glastemperatur bleibt. Massgeblich ist die Glastemperatur des Schalenmaterials, es sei denn, dass die Glastemperatur des Kernmaterials sehr weit unter der des Schalenmaterials liegt.

Die getrockneten Pulverteilchen haben in der Regel eine Grösse von etwa 10 bis 500 μm. Sie sind in Benzin umso leichter löslich, je weniger verglast und versintert die Latexteilchen in den einzelnen Pulverkörnchen sind. Das Pulver kann in Trommeln, Säcken oder Pulverbehältern bei Temperaturen bis 60°C ohne Gefahr der Verklebung gelagert werden.

Anwendung

In der Praxis lässt sich die Anwendung als Bindemittel von der Anwendung als Verdickungsmittel nicht streng unterscheiden. In beiden Fällen wird eine Lösung des Emulsionspolymerisats mit Pigmenten und Füllstoffen zu einem physikalisch trocknenden streich-, spritz- oder spachtelbaren Überzugs- oder Beschichtungsmittel verarbeitet. Die dafür bekannten benzinlöslichen Bindemittel ergeben oft nicht die gewünschte Viskosität, die das Wegschlagen des Bindemittels auf porösen, saugfähigen Substraten verhindert oder das gewünschte kurz abreissende Viskositätsverhalten, das beim Auftrag dicker Beschichtungen aus hochgefüllten Massen in einem Arbeitsgang erforderlich ist. Andererseits ergeben die nicht gelbildenden Bindemittel häufig einen höheren Glanz und einen feineren Verlauf der Beschichtung, vor allem bei schwach gefüllten Überzugsmassen.

Das erfindungsgemässe Verdickungs- und Bindemittel gestattet es, durch Abmischung mit nicht vernetzten und daher nicht gelbildenden, benzinlöslichen Bindemitteln Überzugsmittel mit einem dem Füllungsgrad und dem Beschichtungstyp angemessenen Ausgleich von strukturbildenden und thixotropen Eigenschaften einerseits und verlauf- und glanzfördernden Eigenschaften andererseits herzustellen. Das Mischungsverhältnis der beiden Komponenten kann in beliebige Grenzen, beispielsweise 1:99 bis 99:1 (Gew.-T.) variiert werden. Merkliche Effekte beider Bestandteile werden vor allem im Mischungsbereich von 10:90 bis 90:10 erhalten. Als zusätzliches Weichmachungs- und Bindemittel können benzinlösliche Chlorparaffine in einer Menge bis zu 50 Gew.% des Gesamtbindemittels mitverwendet werden. Unvernetzte, benzinlösliche Bindemittel, die sich zur Abmischung mit den Verdickungs- und Bindemitteln gemäss der Erfindung in besonderem Masse eignen, sind aus der DE-PS 2 060 545 bekannt. Hervorragend zum Abmischen geeignete Bindemittel zeichnen sich durch eine reduzierte Viskosität $\eta_{sp}/c$ zwischen 20

und 70 ml/g und eine Polymerisatzusammensetzung aus

a) 39 bis 95 Gew.% Isobutyl- oder Cyclohexylmethacrylat

b) 3 bis 60 Gew.% Acryl- oder Methacrylsäurealkylestern mit 6 bis 12 C-Atomen im Alkylrest,

c) 1 bis 10 Gew.% eines Hydroxyalkylesters oder Hydroxyalkylamids der Acryl- und/oder Methacrylsäure mit wenigstens 2 C-Atomen im Hydroxyalkylrest, wobei die Hydroxylgruppe nicht an das α-C-Atom gebunden ist, aus.

Diese Polymerisate sind analog dem in der DE-PS 2 060 545 beschriebenen Verfahren herstellbar.

Das Verhältnis von Bindemitteln, Lösungsmitteln und Pigmenten einschliesslich Füllstoffen richtet sich in üblicher Weise nach den Anforderungen, die hinsichtlich der Verarbeitungseigenschaften und der Art des Überzugs an das Beschichtungsmittel gestellt werden. Die Pigment-Volumenkonzentration liegt bei Fassadenfarben zwischen 40–70%, bei Kunstharzputzen und Buntsteinputzen zwischen 0 und 80, sofern man Gesteinssplit nicht zu den Pigmenten rechnet.

Der Anteil des Lösungsmittels beträgt in der Regel 25 bis 45% bezogen auf das Gewicht des gesamten Beschichtungsmittels. Als Lösungsmittel kommen reine aliphatische Kohlenwasserstoffe im Siedebereich von 100 bis 250°C oder deren Gemisch mit bis zu 20 Gew.% aromatischen Kohlenwasserstoffen, wie Toluol, Xylol oder höher alkylierten aromatischen Kohlenwasserstoffen, das als Testbenzin bezeichnet wird, in Betracht. Ester, Ketone, Glykoläther oder ähnliche typische Lacklösemittel sind zwar nicht erforderlich, können aber nach Wunsch als Verlaufmittel mitverwendet werden.

In den nachfolgenden Beispielen werden bevorzugte Ausführungsformen der Erfindung beschrieben. Die wässrigen Dispersionen der zweistufig aufgebauten Emulsionspolymerisate konnten in allen Fällen in einer technischen Sprühtrocknungsanlage unter voller Ausnutzung ihrer Kapazität zu einem Pulver getrocknet werden, ohne dass sich an den Wänden und Verteilungsvorrichtungen der Sprühtrocknungsanlage nennenswerte Polymerisatansetzungen bildeten. Die erhaltenen Pulver sind gut rieselfähig und können in Säcken in üblichen Stapelhöhen gelagert werden, ohne dass die Pulverkörnchen miteinander verkleben.

Beispiel 1
a) Herstellung eines pulverförmigen Verdickungsmittels

In einem mit Rückflusskühler, Rührer und Thermometer ausgerüsteten Polymerisationsgefäss werden 0,32 Gew.-Teile des Natriumsalzes des sulfatierten Umsetzungsproduktes aus 1 Mol Tri-sec-butylphenol und 7 Mol Äthylenoxid in 192 Gew.-Teilen Wasser unter Rühren auf 80° erhitzt und mit 0,06 Gew.-Teilen Ammoniumperoxodilsulfat versetzt. Hierzu gibt man für die erste Polymerisationsstufe zum Aufbau des Kernmaterials bei 80°C innerhalb von zwei Stunden eine zuvor hergestellte Emulsion aus 140,2 Gew.-Teilen Wasser, 0,8 Gew.-Teilen des o.g. Emulgators, 112 Gew.-Teilen Isobutylmethacrylat, 47,68 Gew.-Teilen 2-Äthylhexylmethacrylat und 0,32 Gew.-Teilen Glykoldimethacrylat. Anschliessend wird in einer zweiten Stufe eine Emulsion für die Bildung des Schalenmaterials, bestehend aus 140,2 Gew.-Teilen Wasser, 0,8 Gew.-Teilen des o.g. Emulgators, 159,2 Gew.-Teilen Isobutylmethacrylat, 0,8 Gew.-Teilen Allylmethacrylat und 0,32 Gew.-Teilen 2-Äthylhexylthioglycolat in 2 Std. bei 80° zugegeben. Zur Nachpolymerisation wird der Ansatz noch eine Stunde bei 80° gehalten, anschliessend abgekühlt und filtriert. Man erhält eine koagulatfreie Dispersion mit einem Feststoffgehalt von ca. 40%, die durch Sprühtrocknung bei einer Luftaustrittstemperatur von 65–70° in ein Pulverprodukt überführt wird Der $T_{1max}$-Wert des Polymerisatkernes beträgt 64°C.

b) Herstellung einer Fassadenfarbe
Zusammensetzung:

72,0 Gew.-Teile Polymerisat A*
8,0 Gew.-Teile des oben beschriebenen Pulverprodukts
80,0 Gew.-Teile Chlorparaffin flüssig (60% Chlorgehalt)
340,0 Gew.-Teile Testbenzin
150,0 Gew.-Teile Titandioxid Rutiltyp
50,0 Gew.-Teile Kieselgur
150,0 Gew.-Teile Dolomit
150,0 Gew.-Teile krist. Calciumcarbonat

*Polymerisat A ist ein gemäss der DE-PS 2 060 545 hergestelltes unvernetztes Mischpolymerisat aus 87,0 Gew.-Teilen Isobutylmethacrylat, 10,0 Gew.-Teilen 2-Äthylhexylacrylat, 3,0 Gew.-Teilen Hydroxypropylmonoacrylat mit einer reduzierten Viskosität von $\eta_{sp}/c = 50$ ml/g.

Die Fassadenfarbe lässt sich mit Hilfe der gebräuchlichen Verfahren, wie beispielsweise Rollen, Streichen und Spritzen auftragen. Hinsichtlich Verarbeitbarkeit, auch bei tiefen Temperaturen und Ablaufneigung werden sehr gute Werte erzielt.

c) Herstellung eines Kornputzes
Ein Marmorsplitputz wird wie folgt zusammengesetzt:

88 Gew.-Teile des gemäss Abschnitt a hergestellten Pulverprodukts
12 Gew.-Teile eines Carbamidsäureester-Weichharzes (Handelsbezeichnung Uresin B®, Hoechst AG)
12 Gew.-Teile Kieselgel als Mattierungsmittel (Handelsbezeichnung Syloid 276®, Grace)
208 Gew.-Teile Testbenzin
680 Gew.-Teile Marmorsplit

Beispiel 2
Eine Emulsion aus 140,2 Gew.-Teilen Wasser, 0,8 Gew.-Teilen Natriumlaurylsulfat, 112 Gew.-Teilen Isobutylmethacrylat, 31,44 Gew.-Teilen 2-Äthylhexylmethacrylat, 16 Gew.-Teilen 2-Äthylhexylacrylat und 0,56 Gew.-Teilen 1,4-Butandioldimethacrylat wird bei 80° innerhalb von 2 Stunden analog Beispiel 1 zu einer auf 80° erhitzten Vorlage aus 192 Gew.-Teilen Wasser, 0,4 Gew.-Teilen Natriumlaurylsulfat und 0,06 Gew.-Teilen Ammoniumperoxodisulfat gegeben. Im Anschluss daran lässt man unter gleichen Bedingungen eine aus 159,36 Gew.-Teilen Isobutylmethacrylat, 0,64 Gew.-Teilen Allylacrylat, 0,5 Gew.-Teilen 2-Äthylhexylthioglycolat, 0,8 Gew.-Teilen Natriumlaurylsulfat und 140,2 Gew.-Teilen Wasser bestehende Emulsion zufliessen. Nach einer Stunde Nachreaktion erhält man eine ca. 40%ige, koagulatfreie Dispersion aus der das Polymerisat durch Sprühtrocknung bei einer Luftaustrittstemperatur von 65–70° gewonnen wird.

$T_{1max}$ des Kernpolymerisats: 51°C.

## Beispiel 3

a) Herstellung eines pulverförmigen Verdikkungs- und Bindemittels

115,26 Gew.-Teile Isobutylmethacrylat, 40 Gew.-Teile 2-Äthylhexylmethacrylat, 2,4 Gew.-Teile Hydroxypropylacrylat, 1,6 Gew.-Teile Methylmethacrylat, 0,74 Gew.-Teile Trimethylolpropantriacrylat, 0,8 Gew.-Teile Natrium-$C_{15}$-paraffinsulfonat und 140,2 Gew.-Teile Wasser werden emulgiert und in 2 Stunden entsprechend Beispiel 1 zu der auf 80° erhitzten Vorlage aus 192 Gew.-Teilen Wasser, 0,32 Gew.-Teilen Natrium-$C_{15}$-paraffinsulfonat und 0,056 Gew.-Teilen Ammoniumperoxodisulfat getropft. Danach lässt man eine Emulsion aus 159,36 Gew.-Teilen Isobutylmethacrylat, 0,64 Gew.-Teilen Allylmethacrylat, 0,8 Gew.-Teilen Natrium-$C_{15}$-paraffinsulfonat und 140,2 Gew.-Teilen Wasser in 2 Stunden zufliessen und lässt bei 80° noch eine Stunde nachreagieren. Zur Isolierung des Feststoffes wird die Dispersion bei einer Luftaustrittstemperatur nicht über 75° sprühgetrocknet.

$T_{1max}$ des Kernpolymerisats: 66°C.

b) Herstellung eines Kunstharzputzes
   Zusammensetzung:

58,5 Gew.-Teile Verdickungsmittel gemäss Beispiel 3
13,5 Gew.-Teile Polymerisat A
17,0 Gew.-Teile Chlorparaffin flüssig (60% Chlorgehalt)
228,0 Gew.-Teile Testbenzin
115,0 Gew.-Teile Titandioxid Rutil
568,0 Gew.-Teile Calcit 0,01–1,5 mm Durchmesser

Dieser Putz lässt sich mit der Glättkelle in dicker Schicht auf Putz und Mauerwerk auftragen, ohne dass es an senkrechten Flächen zum Abrutschen kommt.

## Beispiel 4

Zu einer auf 80° erhitzten, mit 0,056 Gew.-Teilen Ammoniumperoxodisulfat versetzten Lösung von 0,32 Gew.-Teilen Natrium-$C_{15}$-paraffinsulfonat in 192 Gew.-Teilen Wasser gibt man, wie in Beispiel 1 beschrieben, eine Emulsion aus 115,26 Gew.-Teilen Isobutylmethacrylat, 40 Gew.-Teilen 2-Äthylhexylmethacrylat, 2,4 Gew.-Teilen Hydroxypropylacrylat, 1,6 Gew.-Teilen Methylmethacrylat 0,74 Gew.-Teilen 1,4-Butandioldimethacrylat, 140,2 Gew.-Teilen Wasser und 0,8 Gew.-Teilen Natrium-$C_{15}$-paraffinsulfonat und polymerisiert in einer zweiten Stufe ein emulgiertes Gemisch aus 150,08 Gew.-Teilen Isobutylmethacrylat, 8 Gew.-Teilen Styrol, 1,92 Gew.-Teilen Allylmethacrylat, 0,72 Gew.-Teilen 2-Äthylhexylthioglycolat, 0,8 Gew.-Teilen Natrium-$C_{15}$-paraffinsulfonat und 140,2 Gew.-Teilen Wasser. Die ca. 40%ige, koagulatfreie Disperison wird bei 65–70° Luftaustrittstemperatur sprühgetrocknet.

$T_{1max}$ des Kernpolymerisates: 66°C.

## Beispiel 5

Gemäss Beispiel 1 wird die auf 80° erhitzte Vorlage aus 192 Gew.-Teilen Wasser, 0,32 Gew.-Teilen Natrium-$C_{15}$-paraffinsulfonat und 0,056 Gew.-Teilen Ammoniumperoxodisulfat mit einer Monomerenemulsion aus 115,26 Gew.-Teilen 2-Äthylhexylmethacrylat, 40 Gew.-Teilen Isobutylmethacrylat, 2,4 Gew.-Teilen Hydroxypropylacrylat, 1,6 Gew.-Teilen Methylmethacrylat, 0,74 Gew.-Teilen 1,4-Butandioldimethacrylat, 0,8 Gew.-Teilen Natrium-$C_{15}$-paraffinsulfonat und 140,2 Gew.-Teilen Wasser versetzt. Anschliessend erfolgt der Zulauf einer Emulsion für die Polymerisatschale, bestehend aus 158,08 Gew.-Teilen Isobutylmethacrylat, 1,92 Gew.-Teilen Allylmethacrylat, 0,72 Gew.-Teilen 2-Äthylhexylthioglycolat, 0,8 Gew.-Teilen Natrium-$C_{15}$-paraffinsulfonat und 140,2 Gew.-Teilen Wasser. Man lässt noch eine Stunde bei 80° nachreagieren und erhält eine koagulatfreie Dispersion mit einem Feststoffgehalt von ca. 40%, aus der durch Sprühtrocknung bei unterhalb 70° ein feinteiliges Polymerisatpulver gewonnen wird.

$T_{1max}$ des Kernpolymerisates: 38°C.

## Beispiel 6

Die Dispersionsherstellung erfolgt wie in Beispiel 4 mit dem Unterschied, dass im Zulauf für das Schalenmaterial Styrol durch Cyclohexylmethacrylat ersetzt wird. Die Dispersion wird bei 65–70° sprühgetrocknet.

## Patentansprüche

1. Pulverförmiges, in Benzin gelbildendes Verdickungs- und Bindemittel aus einem Emulsionspolymerisat aus

A) wenigstens 80 Gew.% Alkylestern der Methacrylsäure oder eines Gemisches von Alkylestern der Acrylsäure und der Methacrylsäure mit jeweils 4 oder mehr C-Atomen im Alkylrest
B) wenigstens einem vernetzenden Monomeren
C) gegebenenfalls monoolefinisch ungesättigten aromatischen Comonomeren in einem Anteil unter 20 Gew.% ·
D) gegebenenfalls monoolefinisch ungesättigten, nicht benzinlöslichen Comonomeren in einem Anteil bis zu 10 Gew.%, dadurch gekennzeichnet, dass das Emulsionspolymerisat zweistufig aufgebaut ist und zu 40 bis 80 Gew.% (bezogen auf das Gesamtgewicht des Emulsionspolymerisats) aus einem Kernmaterial der oben angegebenen Zusammensetzung, das als vernetzende Monomere B 0,1 bis 2 Gew.% (bezogen auf das Kernmaterial) Einheiten von Verbindungen mit wenigstens zwei polymerisierbaren olefinischen Kohlenstoff-Doppelbindungen, deren Reaktivität mit der der Monomeren A vergleichbar ist, enthält, und zu 60 bis 20 Gew.% aus einem Schalenmaterial der oben angegebenen Zusammensetzung besteht, das als Alkylester der Methacrylsäure A Einheiten des Isobutyl- oder Cyclohexylmethacrylats und als vernetzende Monomere B 0,05 bis 4 Gew.% (bezogen auf das Schalenmaterial) Einheiten von pfropfvernetzenden Monomeren mit einer olefinischen Kohlenstoffdoppelbindung, deren Reaktivität mit der der Monomeren A vergleichbar ist, und wenigstens einer weiteren olefinischen Kohlenstoffdoppelbindung von geringerer Reaktivität enthält.

2. Verdickungs- und Bindemittel nach Anspruch 1, dadurch gekennzeichnet, dass am Aufbau des Emulsionspolymerisats als Komponente D bzw. als ein Teil derselben Hydroxyalkylester der Acryl- oder Methacrylsäure mit 2 bis 4 C-Atomen im Hydroxyalkylrest beteiligt sind.

3. Verdickungs- und Bindemittel nach den Ansprüchen 1 oder 2, dadurch gekennzeichnet, dass das Kernmaterial einen $T_{1max}$-Wert von 20 bis 80°C hat.

4. Verwendung des Verdickungs- und Bindemittels nach den Ansprüchen 1 bis 3, in einem physikalisch trocknenden Anstrich- oder Beschichtungsmittel, das Benzin als flüssigen Bestandteil enthält.

5. Verwendung des Verdickungs- und Bindemittels gemäss Anspruch 4, dadurch gekennzeichnet, dass das Anstrich- oder Beschichtungsmittel eine Pigment-Volumen-Konzentration von 0 bis 80% hat.

6. Verwendung des Verdickungs- und Bindemittels gemäss den Ansprüchen 4 oder 5 zusammen mit einem unvernetzten Mischpolymerisat aus
a) 39 bis 95 Gew.% Isobutyl- oder Cyclohexylmethacrylat
b) 3 bis 60 Gew.% Acryl- oder Methacrylsäurealkylester mit 6 bis 12 C-Atomen im Alkylrest
c) 1 bis 10 Gew.% eines Hydroxyalkylesters oder Hydroxyalkylamids der Acryl- und/oder Methacrylsäure mit wenigstens 2 C-Atomen im Hydroxyalkylrest, wobei die Hydroxylgruppe nicht an das α-C-Atom gebunden ist, mit einer reduzierten Viskosität $\eta_{sp}/c = 20{-}70$ ml/g.

7. Verwendung des Verdickungs- und Bindemittels gemäss Anspruch 6, dadurch gekennzeichnet, dass das Mischungsverhältnis des Verdickungs- und Bindemittels nach den Ansprüchen 1 bis 3 zu dem unvernetzten Mischpolymerisat im Bereich von 1:99 bis 99:1 liegt.

8. Verwendung des Verdickungs- und Bindemittels gemäss Anspruch 7, dadurch gekennzeichnet, dass das Verhältnis im Bereich 10:90 bis 90:10 liegt.

9. Verwendung des Verdickungs- und Bindemittels gemäss den Ansprüchen 4 bis 8, dadurch gekennzeichnet, dass als zusätzliches Bindemittel ein Chlorparaffin in einer Menge bis zu 50 Gew.% des gesamten Bindemittels mitverwendet wird.

**Claims**

1. Powdered thickener and binder which forms a gel in benzene, consisting of an emulsion polymer of
A) at least 80% by weight of alkylesters of methacrylic acid or a mixture of alkylesters of acrylic and methacrylic acid each having 4 or more carbon atoms in the alkyl moiety
B) at least one cross-linking monomer
C) optionally monoolefinically unsaturated aromatic comonomers in an amount of less than 20% by weight
D) optionally monoolefinically unsaturated, benzene-insoluble comonomers in an amount of up to 10% by weight, characterised in that the emulsion polymer is synthesised in two steps and consists of 40 to 80% by weight (based on the total weight of the emulsion polymer) of a core material of the composition specified above, which contains as the cross-linking monomer B 0.1 to 2% by weight (based on the core material) of units of compounds with at least two polymerisable olefinic carbon double bonds, the reactivity of which is comparable with that of monomer A, and 60 to 20% by weight of a shell material of the composition specified above, which contains as the alkylesters of methacrylic acid A units of isobutyl or cyclohexylmethacrylate and as the cross-linking monomer B 0.05 to 4% by weight (based on the shell material) of units of graft-cross-linking monomers with an olefinic carbon double bond, the reactivity of which is comparable with that of the monomer A, and contains at least one other olefinic carbon double bond of lesser reactivity.

2. Thickener and binder as claimed in claim 1, characterised in that hydroxyalkylesters of acrylic or methacrylic acid having 2 to 4 carbon atoms in the hydroxyalkyl group participate in the synthesis of the emulsion polymer as component D or a part thereof.

3. Thickener and binder as claimed in claim 1 or 2, characterised in that the core material has a $T_{1max}$ value of 20 to 80°C.

4. Use of the thickener and binder as claimed in claims 1 to 3, in a physically drying paint or coating substance which contains benzene as the liquid component.

5. Use of the thickener and binder as claimed in claim 4, characterised in that the paint or coating substance has a pigment volume concentration of from 0 to 80%.

6. Use of the thickener and binder as claimed in claim 4 or 5 together with an uncross-linked copolymer of
a) 39 to 95% by weight of isobutyl or cyclohexylmethacrylate
b) 3 to 60% by weight of alkylacrylate or methacrylate with 6 to 12 carbon atoms in the alkyl group

c) 1 to 10% by weight of a hydroxyalkylester or hydroxyalkylamide of acrylic and/or methacrylic acid with at least 2 carbon atoms in the hydroxyalkyl group, the hydroxyl group not being bonded to the $\alpha$-carbon atom, with a reduced viscosity $\eta_{sp}/c = 20$–$70$ ml/g.

7. Use of the thickener and binder as claimed in claim 6, characterised in that the mixing ratio of the thickener and binder as claimed in claims 1 to 3 to the uncross-linked copolymer is in the range from 1:99 to 99:1.

8. Use of the thickener and binder as claimed in claim 7, characterised in that the ratio is in the range from 10:90 to 90:1.

9. Use of the thickener and binder as claimed in claims 4 to 8, characterised in that a chloroparaffin is used as an addition binder in an amount of up to 50% by weight of the total binder.

## Revendications

1. Epaississant et liant en poudre, formant un gel dans l'essence, se composant d'un produit de polymérisation en émulsion de:

A) au moins 80% en poids d'esters alkyliques de l'acide méthacrylique ou d'un mélange d'esters alkyliques de l'acide acrylique et de l'acide méthacrylique comportant chacun 4 atomes de C ou plus dans le radical alkyle,

B) au moins un monomère réticulant,

C) le cas échéant, des comonomères aromatiques insaturés mono-oléfiniquement, dans une proportion de moins de 20% en poids,

D) le cas échéant, des comonomères insaturés monooléfiniquement, non solubles dans l'essence, dans une proportion allant jusqu'à 10% en poids, caractérisé en ce que le produit de polymérisation en émulsion est édifié en deux étapes et se compose: pour 40 à 80% en poids (sur la base du poids total du produit de polymérisation en émulsion), d'une matière de noyau qui a la composition indiquée ci-dessus et qui contient, en tant que monomère réticulant B, 0,1 à 2% en poids (sur la base de la matière de noyau) d'unités de composés qui comportent au moins deux doubles liaisons C–C oléfiniques polymérisables dont la réactivité est comparable à celle des monomères A, et, pour 60 à 20% en poids, d'une matière d'enveloppe qui a la composition indiquée ci-dessus et qui contient, en tant qu'esters alkyliques de l'acide méthacrylique A, des unités du méthacrylate d'isobutyle ou de cyclohexyle et, en tant que monomères réticulants B, 0,05 à 4% en poids (sur la base de la matière d'enveloppe) d'unités de monomères réticulants par greffage qui comportent une double liaison C–C oléfinique dont la réactivité est comparable à celle des monomères A et au moins une autre double liaison C–C oléfinique de moindre réactivité.

2. Epaississant et liant selon la revendication 1, caractérisé en ce que des esters hydroxyalkyliques de l'acide acrylique ou méthacrylique comportant 2 à 4 atomes de C dans le radical hydroxyalkyle participent à l'édification du produit de polymérisation en émulsion, en tant que composants D ou en tant que partie de ceux-ci.

3. Epaississant et liant selon la revendication 1 ou 2, caractérisé en ce que la matière de noyau a une valeur $T_{1max}$ de 20 à 80°C.

4. Utilisation de l'épaississant et liant selon l'une quelconque des revendications 1 à 3 dans un produit de revêtement ou d'enduction qui contient de l'essence comme constituant liquide.

5. Utilisation de l'épaississant et liant selon la revendication 4, caractérisée en ce que le produit de revêtement ou d'enduction a une concentration en volume de pigment de 0 à 80%.

6. Utilisation de l'épaississant et liant selon la revendication 4 ou 5 conjointement avec un copolymère non ramifié formé à partir de:

a) 39 à 95% en poids de méthacrylate d'isobutyle ou de cyclohexyle,

b) 3 à 60% en poids d'ester alkylique d'acide acrylique ou méthacrylique contenant 6 à 12 atomes de C dans le radical alkyle,

c) 1–10% en poids d'un ester hydroxyalkylique ou d'un hydroxyalkylamide de l'acide acrylique et/ou méthacrylique comportant au moins 2 atomes de C dans le radical hydroxyalkyle, le groupe hydroxyle n'étant pas fixé à l'atome de C en position $\alpha$, copolymère qui a une viscosité réduite $\eta_{sp}/C = 20$–$70$ ml/g.

7. Utilisation de l'épaississant et liant selon la revendication 6, caractérisée en ce que le rapport de mélange de l'épaississant et liant selon l'une quelconque des revendications 1 à 3 au copolymère non réticulé se situe dans la gamme de 1:99 à 99:1.

8. Utilisation de l'épaississant et liant selon la revendication 7, caractérisée en ce que le rapport se situe dans la gamme de 10:90 à 90:10.

9. Utilisation de l'épaississant et liant selon l'une quelconque des revendications 4 à 8, caractérisée en ce qu'on utilise simultanément, comme liant supplémentaire, une paraffine chlorée dans une proportion pouvant s'élever à 50% en poids du liant total.